# EUROPÄISCHE PATENTSCHRIFT

(11) **EP 3 227 149 B1**
(45) Veröffentlichungstag und Bekanntmachung des Hinweises auf die Patenterteilung: **01.08.2018**
(21) Anmeldenummer: 15826135.4
(22) Anmeldetag: 01.12.2015
(51) Int. Cl.: B60R 25/02

(54) **LENKUNGSVERRIEGELUNGSVORRICHTUNG FÜR EIN FAHRZEUG**
STEERING LOCKING DEVICE FOR A VEHICLE
DISPOSITIF DE VERROUILLAGE DE LA DIRECTION D'UN VÉHICULE

(30) Priorität: 03.12.2014 DE 102014017828
(43) Veröffentlichungstag der Anmeldung: 11.10.2017
(73) Patentinhaber: Huf Hülsbeck & Fürst GmbH & Co. KG, 42551 Velbert (DE)
(72) Erfinder: INDINGER, Max, 82131 Gauting (DE); HAGENMEYER, Felix, 71067 Sindelfingen (DE)
(86) Internationale Anmeldenummer: PCT/DE2015/100509
(87) Internationale Veröffentlichungsnummer: WO 2016/086919

(56) Entgegenhaltungen:
- EP-A1- 1 678 017
- EP-A1- 2 572 945
- EP-A2- 1 174 314
- EP-A2- 1 707 457
- DE-A1-102007 026 716
- DE-A1-102007 051 002
- DE-A1-102008 013 487
- JP-A- 2004 106 750
- JP-A- 2014 104 876
- US-A1- 2010 206 020

## Beschreibung

Die Erfindung betrifft eine Lenkungsverriegelungsvorrichtung für ein Fahrzeug gemäß dem Oberbegriff des Anspruchs 1.

In der DE 10 2007 026 716 A1 ist eine motorische Lenkungsvorrichtung beschrieben, bei der ein Bewegungsteil von einem Motor bewegt wird, der mittelbar oder unmittelbar mit einem Riegel versehen ist. Der Riegel soll bezüglich der Lenkung des Fahrzeugs zwischen einer Sperrlage und Freigabelage bewegt werden. Die Sensoren sprechen auf die Bewegung des Bewegungsteils an und sind an einen Auswerter angeschlossen, der den Motor steuert. Während der Bewegung wird die Geschwindigkeit des Bewegungsteils gemessen und dieses Messergebnis so zur Steuerung des Motors eingesetzt, wobei sich eine Geräuschminimierung der Lenkungsverriegelung ergibt.

Die US2010/0206020A1 beschreibt eine Lenkungsverriegelungsvorrichtung für ein Fahrzeug.

Der Erfindung liegt die Aufgabe zu Grunde, eine gegenüber dem Stand der Technik verbesserte Lenkungsverriegelungsvorrichtung anzugeben.

Die Aufgabe wird erfindungsgemäß mit den in Anspruch 1 angegebenen Merkmalen gelöst.

Eine Lenkungsverriegelungsvorrichtung für ein Fahrzeug umfasst zumindest einen Elektromotor, ein Bewegungselement und ein Stellelement, wobei der Elektromotor und das Stellelement mittelbar über das Bewegungselement derart in mechanischer Wirkverbindung miteinander stehen, dass das Stellelement zwischen einer eine Lenkung des Fahrzeugs sperrenden ersten Endlage und einer die Lenkung des Fahrzeugs freigebenden zweiten Endlage bewegbar ist.

Erfindungsgemäß ist eine Erfassungseinheit vorgesehen, mittels welcher erfassbar ist, ob sich das Stellmittel in einer der Endlagen befindet, wobei die Erfassungseinheit zwischen zwei Zuständen schaltbar ist und eine Lage des Stellelements davon abhängig ist, in welchem der Zustände sich die Erfassungseinheit befindet, und wobei die Erfassungseinheit einen Erfassungsbereich aufweist und die Erfassungseinheit mittels einer Bewegung des Bewegungselements durch den Erfassungsbereich in einen anderen Zustand überführbar ist.

Mittels der derart ausgebildeten Lenkungsverriegelungsvorrichtung ist es möglich, gegenüber dem Stand der Technik mit nur einer Erfassungseinheit zu erfassen, ob sich das Stellmittel in einer Endlage befindet. Dabei ist das sensorische Wirkprinzip, bei dem die Lage des Stellelements Einfluss auf den Zustand der Erfassungseinheit hat, auf sehr einfache und kostengünstige Weise umzusetzen. Die Erfassungseinheit kann somit auf vielfältige Weise physikalisch realisiert werden, welche eine Zustandsänderung zwischen zwei Zuständen, auch als sogenannte Transitionslogik bezeichnet, durchführen kann. Vorteilhafte Ausgestaltungen der Erfindung sind Gegenstand der Unteransprüche. Ausführungsbeispiele der Erfindung werden im Folgenden anhand von Zeichnungen näher erläutert.

Dabei zeigen:
Fig. 1 schematisch eine perspektivische Ansicht einer Lenkungsverriegelungsvorrichtung in einer erfindungsgemäßen Ausführungsform mit einem Stellelement in einer ersten Endlage,
Fig. 2 schematisch eine perspektivische Ansicht der Lenkungsverriegelungsvorrichtung gemäß Fig. 1 mit dem Stellelement in einer Zwischenlage und
Fig. 3 schematisch eine perspektivische Ansicht der Lenkungsverriegelungsvorrichtung gemäß Fig. 1 mit dem Stellelement in einer zweiten Endlage.

Einander entsprechende Teile sind in allen Figuren mit den gleichen Bezugszeichen versehen.

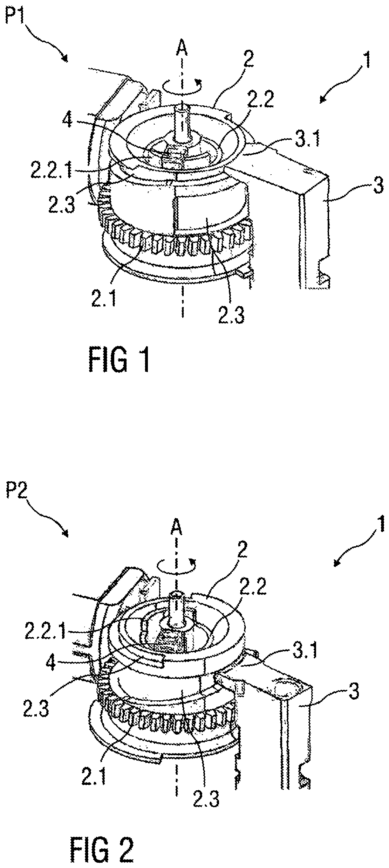

Die Fig. 1 bis Fig. 3 zeigen jeweils eine Lenkungsverriegelungsvorrichtung 1 für ein Fahrzeug, wobei die Lenkungsverriegelungsvorrichtung 1 in einer beispielhaften Ausführungsform gezeigt ist.

Die Lenkungsverriegelungsvorrichtung 1 umfasst einen nicht dargestellten Elektromotor, ein Bewegungselement 2 und ein Stellelement 3, wobei das Stellelement 3 in den Fig. 1 bis Fig. 3 in verschiedenen Lagen gezeigt ist.

Der nicht gezeigte Elektromotor umfasst ein Getriebe, welches bei Betätigung das Bewegungselement 2 antreibt. Dazu umfasst das Bewegungselement 2 im gezeigten Ausführungsbeispiel einen umlaufenden Zahnradkranz 2.1, welcher in Wirkverbindung mit einem nicht dargestellten, korrespondierenden Zahnrad oder einer Zahnstange des Elektromotors steht.

Der Zahnradkranz 2.1 ist an einem äußeren Umfang des Bewegungselements 2 und diesen vollständig umlaufend angeordnet. Das Bewegungselement 2 ist im Wesentlichen hohlzylindrisch ausgebildet ist und weist eine Rotationsachse A auf, um die das Bewegungselement 2 konzentrisch rotiert, wenn das Getriebe betätigt ist.

Im Bereich eines Innenradius des Bewegungselements 2 ist ein weiterer Hohlzylinder 2.2 angeordnet, dessen Außenradius kleiner ist als der Innenradius des Bewegungselements 2 . Der weitere Hohlzylinder 2.2 ist ebenfalls konzentrisch um die Rotationsachse A angeordnet und rotiert korrespondierend zum Bewegungselement 2 . Der weitere Hohlzylinder 2.2 weist an der gezeigten Stirnseite, welche sich in Betrachtungsrichtung am oberen stirnseitigen Ende des weiteren Hohlzylinders 2.2 befindet, einen Abschnitt 2.2.1 auf, welcher von der Stirnseite in Richtung der Rotationsachse A nach oben axial abragt und in Umfangsrichtung der Stirnseite eine Länge von weniger als 360 Grad, insbesondere eine Länge von ca. 120 Grad aufweist.

Da hierbei nur eine beispielhafte Ausführungsform der Lenkungsverriegelungsvorrichtung 1 beschrieben ist, kann anstelle des Hohlzylinders 2.2 alternativ auch ein als Vollkörper ausgebildeter Zylinder verwendet werden, wobei der Abschnitt 2.2.1 z. B. als eine Kontur oder Ausformung ausgebildet ist, die auf einer Stirnseite des Zylinders angeordnet ist. Des Weiteren ist es alternativ möglich, dass sich aus dem Hohlzylinder 2.2 eine Nocke mit einem größeren Durchmesser als der Außendurchmesser des Hohlzylinders 2.2 herausbewegt.

Das Bewegungselement 2 umfasst weiterhin eine Führungsfläche 2.3, die als eine Materialaussparung am äußeren Umfang des Bewegungselements 2 ausgebildet ist. Die Führungsfläche 2.3 ist in Betrachtungsrichtung oberhalb des Zahnradkranzes 2.1 am äußeren Umfang angeordnet und erstreckt sich spiralförmig oder schneckenförmig am äußeren Umfang mit einer Führungslänge von etwas mehr als 360 Grad. Eine Breite der Führungsfläche 2.3 nimmt dabei in Betrachtungsrichtung von oben nach unten zu, wobei die Breite der Führungsfläche 2.3 parallel zur Rotationsachse A verläuft.

Die Führungsfläche 2.3 dient der Führung des Stellelements 3, welches als ein Riegel ausgebildet ist, der in den gezeigten Ausführungsbeispielen nur abschnittsweise gezeigt ist. Das Stellelement 3 umfasst ein dem Bewegungsteil zugewandtes, hakenförmiges Ende 3.1, welches in die Führungsfläche 2.3 eingreift. Ein gegenüberliegendes, nicht gezeigtes Ende des Stellelements 3 ist mit einer Sperrvorrichtung einer Lenkung des Fahrzeugs koppelbar, wobei diese Komponenten ebenfalls nicht gezeigt sind.

Erfindungsgemäß umfasst die Lenkungsverriegelungsvorrichtung 1 eine Erfassungseinheit 4 mit einem Erfassungsbereich, wobei der Erfassungsbereich mit dem Bewegungselement 2 in Wirkverbindung steht.

Die Erfassungseinheit 4 ist im vorliegenden Ausführungsbeispiel als eine Einweg-Lichtschranke ausgebildet, welche auch als eine Gabellichtschranke bekannt ist. Hierbei sind sich Sender und Empfänger gegenüberliegend angeordnet, wobei der Sender einen Lichtstrahl aussendet, den der Empfänger empfängt. Wie gezeigt sind Sender und Empfänger in einem gemeinsamen Gehäuse angeordnet. Alternativ können der Sender und der Empfänger auch in getrennten Gehäusen angeordnet sein. Ein Erfassungsbereich der Erfassungseinheit 4 wird durch die Lichtschranke gebildet.

Die Erfassungseinheit 4 ist drehfest zum Bewegungselement 2 angeordnet und mittels einer nicht gezeigten Befestigungskomponente innerhalb der Lenkungsverriegelungsvorrichtung 1 fixiert, wobei die Erfassungseinheit 4 hier im Bereich eines Innenradius des Bewegungselements 2 angeordnet ist. Insbesondere ist der Erfassungsbereich der Erfassungseinheit 4 im Bereich einer Rotationsbahn des Abschnitts 2.2.1 angeordnet, worauf im Folgenden näher eingegangen wird. Weiterhin ist die Erfassungseinheit 4 mit einer nicht gezeigten Recheneinheit, insbesondere mit einem Mikrocontroller gekoppelt. Die Erfassungseinheit 4 oder ein Erfassungsbereich der Erfassungseinheit 4 kann alternativ, z. B. im Beispiel mit der zuvor erwähnten Nocke, auch seitlich des Hohlzylinders 2.2 angeordnet sein, wobei im Beispiel der Gabellichtschranke diese um 90 Grad versetzt zur oben beschriebenen Position ausgerichtet ist.

Nachfolgend wird dazu der Betrieb der Lenkungsverriegelungsvorrichtung 1 näher erläutert.

In Fig. 1 ist das Stellelement 3 in einer die Lenkung des Fahrzeugs freigebenden ersten Endlage P1 angeordnet. Hierbei ist das Stellelement 3 mit dem freien Ende 3.1 an einem oberen Ende der Führungsfläche 2.3 angeordnet, wobei ein Teil des Abschnitts 2.2.1 im Erfassungsbereich der Erfassungseinheit 4 angeordnet ist. D. h. ein Teil des Abschnitts 2.2.1 ist zwischen dem Sender und dem Empfänger der Einweg-Lichtschranke angeordnet, wodurch die Lichtschranke unterbrochen ist und der Empfänger keine Lichtsignal empfängt. Die Unterbrechung der Lichtschranke bewirkt eine Zustandsänderung der Erfassungseinheit 4, z. B. in den Zustand "Aktiv". Da die Erfassungseinheit 4 mit der Recheneinheit gekoppelt ist, ist dieser daraus folgend bekannt, dass sich das Stellelement 3 in der ersten Endlage P1 befindet, in welcher das nicht gezeigte freie Ende des Stellelements 3 nicht mit einer Sperrvorrichtung der Lenkung gekoppelt ist und die Lenkung des Fahrzeugs somit freigegeben ist.

Bei Betätigung des Elektromotors führt das Bewegungselement 2 eine Rotation mit der in Fig. 1 durch einen Pfeil gekennzeichneten Rotationsrichtung durch. Das freie Ende 3.1 des Stellelements 3 wird dabei innerhalb der Führungsfläche 2.3 geführt, wobei sich das Stellelement 3 in Betrachtungsrichtung axial nach unten bewegt, d. h. das Stellelement 3 bewegt sich parallel zur Rotationsachse A nach unten. Dies ist durch die spiralförmig oder schneckenförmig nach unten verlaufende Führungsfläche 2.3 begründet. Das Bewegungselement 2 und das Stellelement 3 bilden somit ein weiteres Getriebe.

In der in Fig. 2 gezeigten Zwischenlage P2 des Stellelements 3 hat sich das Bewegungselement 2 um einen bestimmten Winkel um die Rotationachse A gedreht, wodurch der Abschnitt 2.2.1 nun außerhalb des Erfassungsbereichs der Erfassungseinheit 4 angeordnet ist. Dabei ist die Lichtschranke nun nicht mehr unterbrochen, so dass die Erfassungseinheit 4 in einen anderen Zustand, z. B. in den Zustand "Inaktiv" geführt ist.

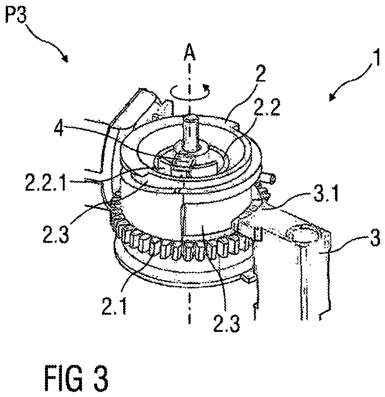

Dreht sich das Bewegungselement 2 weiter, wird das Stellelement 3 in eine die Lenkung des Fahrzeugs sperrende zweite Endlage P3 überführt, wie es Fig. 3 zeigt.

Hierbei ist das freie Ende 3.1 im Bereich eines unteren Endes der Führungsfläche 2.3 angeordnet, wobei das freie Ende 3.1 nicht unmittelbar am Anschlag der Führungsfläche 2.3 angeordnet ist, um einen Blocklauf der Führungsfläche 2.3 zu vermeiden. Dabei greift das nicht gezeigte freie Ende des Stellelements 3 in eine Sperraufnahme einer Lenksäule ein, die sich im Fahrzeug befindet. Damit sind die Lenksäule und somit auch die Lenkung des Fahrzeugs gesperrt.

Hierbei ist der Abschnitt 2.2.1 erneut innerhalb des Erfassungsbereichs angeordnet, so dass der Zustand der Erfassungseinheit 4 wieder dem Zustand der Erfassungseinheit 4 gemäß Fig. 1 entspricht.

Der Recheneinheit sind hierbei sowohl die entsprechende Endlage P1, P3 als auch die Rotationsrichtung bekannt, so dass zur Erfassung, ob sich das Stellelement 3 in einer der Endlagen P1, P3 befindet, nur eine Erfassungseinheit 4 erforderlich ist. Dazu führt die Erfassungseinheit 4 die zuvor beschriebene Zustandsänderung, beispielsweise "Aktiv" -"Inaktiv" -"Aktiv" durch, so dass der Recheneinheit mit nur einer Erfassungseinheit 4 bekannt ist, ob sich das Stellelement 3 in einer der Endlagen P1, P3 befindet.

Zusätzlich ist mittels der Recheneinheit eine Mindestverfahrzeit des Bewegungselements 2 überwachbar. Dabei ist der Recheneinheit ein Startzeitpunkt des Stellelements 3 bekannt, wobei in der Recheneinheit eine Mindestzeit zwischen einer Bewegung des Stellelements 3 zwischen der ersten Endlage P1 und der zweiten Endlage P2 hinterlegt ist, innerhalb der keine Zustandsänderung der Erfassungseinheit 4 erfolgen darf. Dies ermöglicht zusätzlich eine zuverlässige Erfassung einer Endlage P1, P3 des Stellelements 3 .

Des Weiteren ist der Recheneinheit bekannt, in welcher der Endlagen P1, P3 sich das Stellelement 3 momentan befindet oder von welcher Endlage P1, P3 ausgehend sich das Stellelement 3 bewegt. Dies ist mittels eines persistenten Speicherelements, welches mit der Recheneinheit gekoppelt oder in dieser integriert angeordnet ist, möglich. Beispielsweise ist das Speicherelement ein sogenannter Flashspeicher, in welchem hinterlegt ist, ob sich das Stellelement 3 in einer der Endlagen P1, P3 befindet und in welcher der Endlagen P1, P3 sich das Stellelement P1, P3 befindet bzw. in welcher der Endlagen P1, P3 das Stellelement 3 zuletzt angeordnet war.

Die gezeigte Lenkungsverriegelungsvorrichtung 1 stellt hierbei nur eine beispielhafte Ausführungsform der Erfindung dar. Die Ausbildung der Erfassungseinheit 4 sowie die Ausführung des Abschnitts 2.2.1 können alternativ auch anders ausgeführt werden. Beispielsweise kann die Erfassungseinheit 4 auch als ein mechanisches Tastelement ausgebildet sein, wobei der Abschnitt 2.2.1 derart ausgeführt ist, dass eine Rotation des Bewegungselements 2 eine Zustandsänderung des Tastelements durch den Abschnitt 2.2.1 bewirkt. Beispielsweise wird das Tastelement geschlossen, wenn der Abschnitt 2.2.1 das Tastelement passiert. Weiterhin kann die Erfassungseinheit 4 auch als ein Hallelement oder als ein induktives Schaltelement ausgebildet sein.

### Bezugszeichenliste

1 Lenkungsverriegelungsvorrichtung
2 Bewegungselement
2.1 Zahnradkranz
2.2 Hohlzylinder
2.2.1 Abschnitt
2.3 Führungsfläche
3 Stellelement
3.1 freies Ende
4 Erfassungseinheit
A Rotationsachse
P1 erste Endlage
P2 Zwischenlage
P3 zweite Endlage

## Patentansprüche

1. Lenkungsverriegelungsvorrichtung (1) für ein Fahrzeug, umfassend zumindest einen Elektromotor, ein Bewegungselement (2) und ein Stellelement (3), wobei der Elektromotor und das Stellelement (3) mittelbar über das Bewegungselement (2) derart in mechanischer Wirkverbindung miteinander stehen, dass das Stellelement (3) zwischen einer eine Lenkung des Fahrzeugs freigebenden ersten Endlage (P1) und einer die Lenkung des Fahrzeugs sperrenden zweiten Endlage (P3) bewegbar ist,
und eine Erfassungseinheit (4), mittels welcher erfassbar ist, ob sich das Stellelement (3) in einer der Endlagen (P1, P3) befindet,
- wobei die Erfassungseinheit (4) zwischen zwei Zuständen schaltbar ist und eine Lage des Stellelements (3) davon abhängig ist, in welchem der Zustände sich die Erfassungseinheit (4) befindet, und
- wobei die Erfassungseinheit (4) einen Erfassungsbereich aufweist und die Erfassungseinheit (4) mittels einer Bewegung des Bewegungselements (2) durch den Erfassungsbereich in einen anderen Zustand überführbar ist,
**dadurch gekennzeichnet, dass**
die Erfassungseinheit (4) im Bereich eines Innenradius des Bewegungselements (2) angeordnet ist.

2. Lenkungsverriegelungsvorrichtung (1) nach Anspruch 1, **dadurch gekennzeichnet, dass** die Erfassungseinheit (4) mit einer Recheneinheit gekoppelt ist.

3. Lenkungsverriegelungsvorrichtung (1) nach Anspruch 2, **dadurch gekennzeichnet, dass** in der Recheneinheit eine Mindestverfahrzeit für eine Bewegung des Stellelements (3) zwischen der ersten Endlage (P1) und der zweiten Endlage (P3) hinterlegt ist.

4. Lenkungsverriegelungsvorrichtung (1) nach Anspruch 2 oder 3, **dadurch gekennzeichnet, dass** die Recheneinheit derart ausgebildet ist, dass eine momentane Endlage (P1, P3) des Stellelements (3) oder die Endlage (P1, P3) des Stellelements (3), von welcher ausgehend sich das Stellelement (3) bewegt, ermittelbar ist.

5. Lenkungsverriegelungsvorrichtung (1) nach einem der vorhergehenden Ansprüche, **dadurch gekennzeichnet, dass** die Erfassungseinheit (4) als eine elektronisch-optische Einheit ausgebildet ist, die einen Lichtstrahl aussendet, wobei der Erfassungsbereich durch den Lichtstrahl gebildet ist.

6. Lenkungsverriegelungsvorrichtung (1) nach einem der Ansprüche 1 bis 4, **dadurch gekennzeichnet, dass** die Erfassungseinheit (4) als ein mechanisches Tastelement ausgebildet ist, wobei der Erfassungsbereich durch die physikalische Ausformung des Tastelements gebildet ist.

7. Lenkungsverriegelungsvorrichtung (1) nach einem der vorhergehenden Ansprüche, **dadurch gekennzeichnet, dass** das Bewegungselement (2) einen Abschnitt (2.2.1) aufweist, welcher vorgesehen ist, eine Zustandsänderung der Erfassungseinheit (4) zu bewirken, wenn sich der Abschnitt (2.2.1) durch den Erfassungsbereich der Erfassungseinheit (4) bewegt.

8. Lenkungsverriegelungsvorrichtung (1) nach einem der vorhergehenden Ansprüche, **dadurch gekennzeichnet, dass** das Bewegungselement (2) eine Führungsfläche (2.3) aufweist, die zur Führung eines freien Endes (3.1) des Stellelements (3) vorgesehen ist.

9. Lenkungsverriegelungsvorrichtung (1) nach einem der vorhergehenden Ansprüche, **dadurch gekennzeichnet, dass** das Bewegungselement (2) rotierbar ausgebildet ist.

## Claims

1. A steering lock device (1) for a vehicle, comprising at least one electric motor, a moving element (2) and an actuating element (3), wherein the electric motor and the actuating element (3) cooperate with each other mechanically indirectly via moving element (2) in such manner that the actuating element (3) is movable between a first end position (P1) in which steering of the vehicle is enabled, and a second end position (P3) in which steering of the vehicle is blocked, and a detection unit (4), by means of which it can be detected whether the actuating element (3) is located in one of the end positions (P1, P3),
- wherein the detection unit (4) is switchable between two states and a position of the actuating element (3) is dependent on which of the states the detection unit (4) is in, and
- wherein the detection unit (4) has a detection range, and the detection unit (4) can be transferred through the detection range into another state by means of a movement of the moving element (2),
**characterized in that**
the detection unit (4) is arranged within an area of an inner radius of the moving element (2).

2. The steering lock device (1) according to Claim 1, **characterized in that** the detection unit (4) is coupled to a computing unit.

3. The steering lock device (1) according to Claim 2, **characterized in that** a minimum travel time for a movement of the actuating element (3) between the first end position (P1) and the second end position (P3) stored in the computing unit.

4. The steering lock device (1) according to Claim 2 or 3, **characterized in that** the computing unit is designed such that a current end position (P1, P3) of the actuating element (3) or the end position (P1, P3) of the actuating element (3) from which the actuating element (3) begins its movement can be determined.

5. The steering lock device (1) according to any one of the preceding claims, **characterized in that** the detection unit (4) is embodied as an electronic-optical unit which emits a light beam, wherein the detection range is formed by the light beam.

6. The steering lock device (1) according to any one of Claims 1 to 4, **characterized in that** the detection unit (4) is designed as a mechanical feeler element, wherein the detection range is formed by the physical deflection of the feeler element.

7. The steering lock (1) according to one of the preceding claims, **characterized in that** the moving element (2) has a section (2.2.1) which is provided to cause a change in state of the detection unit (4) when the section (2.2.1) moves through the detection area of the detection unit (4) .

8. The steering lock (1) according to one of the preceding claims, **characterized in that** the moving element (2) has a guide surface (2.3) which is provided for guiding a free end (3.1) of the actuating element (3).

9. The steering lock (1) according to one of the preceding claims, **characterized in that** the moving element (2) is designed so as to be rotatable.

## Revendications

1. Dispositif de verrouillage de direction (1) pour un véhicule, comprenant au moins un moteur électrique, un élément mobile (2) et un élément de commande (3), le moteur électrique et l'élément de commande (3) étant indirectement en liaison fonctionnelle mécanique l'un avec l'autre par l'élément mobile (2) de telle manière que l'élément de commande (3) peut être déplacé entre une première position finale (P1) libérant une direction du véhicule et une deuxième position finale (P3) bloquant la direction du véhicule et une unité de saisie (4) au moyen de laquelle il est possible de saisir si l'élément de commande (3) se trouve dans une des positions finales (P1, P3),
- l'unité de saisie (4) pouvant être commutée entre deux états et une position de l'élément de commande (3) dépendant dans lequel des états se trouve l'unité de saisie (4), et
- l'unité de saisie (4) comportant une zone de saisie et l'unité de saisie (4) pouvant être transférée dans un autre état par la zone de saisie au moyen d'un déplacement de l'élément mobile (2),
**caractérisé en ce que**
l'unité de saisie (4) est disposée dans la zone d'un rayon intérieur de l'élément mobile (2).

2. Dispositif de verrouillage de direction (1) selon la revendication 1, **caractérisée en ce que** l'unité de saisie (4) est couplée à une unité de calcul.

3. Dispositif de verrouillage de direction (1) selon la revendication 2, **caractérisée en ce qu'**une durée minimale de course pour un déplacement de l'élément de commande (3) est mémorisée dans l'unité de calcul entre la première position finale (P1) et la deuxième position finale (P3).

4. Dispositif de verrouillage de direction (1) selon la revendication 2 ou 3, **caractérisée en ce que** l'unité de calcul est constituée de telle sorte que l'on peut déterminer une position finale momentanée (P1, P3) de l'élément de commande (3) ou la position finale (P1, P3) de l'élément de commande (3), à partir de laquelle l'élément de commande (3) se déplace.

5. Dispositif de verrouillage de direction (1) selon l'une quelconque des revendications précédentes, **caractérisée en ce que** l'unité de saisie (4) est constituée comme une unité électronique optique, qui émet un faisceau lumineux, la zone de saisie étant formée par le faisceau lumineux.

6. Dispositif de verrouillage de direction (1) selon l'une quelconque des revendications 1 à 4, **caractérisée en ce que** l'unité de saisie (4) est constituée comme un élément palpeur mécanique, la zone de saisie étant formée par la conformation physique de l'élément palpeur.

7. Dispositif de verrouillage de direction (1) selon l'une quelconque des revendications précédentes, **caractérisée en ce que** l'élément mobile (2) comporte une section (2.2.1) laquelle est prévue pour causer une modification d'état de l'unité de saisie (4), lorsque la section (2.2.1) se déplace à travers la zone de saisie de l'unité de saisie (4) .

8. Dispositif de verrouillage de direction (1) selon l'une quelconque des revendications précédentes, **caractérisée en ce que** l'élément mobile (2) comporte une surface de guidage (2.3) qui est prévue pour guider une extrémité libre (3.1) de l'élément de commande (3).

9. Dispositif de verrouillage de direction (1) selon l'une quelconque des revendications précédentes, **caractérisée en ce que** l'élément mobile (2) est constitué pouvant tourner.
